Europäisches Patentamt

European Patent Office

Office européen des brevets

(11) Veröffentlichungsnummer: **0 371 322**
**A2**

## (12) EUROPÄISCHE PATENTANMELDUNG

(21) Anmeldenummer: **89121124.5**

(22) Anmeldetag: **15.11.89**

(51) Int. Cl.5: **G01B 5/00**

(30) Priorität: **26.11.88 DE 3839938**

(43) Veröffentlichungstag der Anmeldung:
**06.06.90 Patentblatt 90/23**

(84) Benannte Vertragsstaaten:
**AT BE FR GB IT SE**

(71) Anmelder: **THYSSEN INDUSTRIE AG**
**Am Thyssenhaus 1**
**D-4300 Essen 1(DE)**

(72) Erfinder: **Schmale, Erhard, Dipl.-Ing.**
**Parkstrasse 4**
**D-3549 Breuna-Wettesingen(DE)**

(74) Vertreter: **Freiherr von Schorlemer, Reinfried,**
**Dipl.-Phys.**
**Patentanwalt Brüder-Grimm-Platz 4**
**D-3500 Kassel(DE)**

(54) Oberflächenprüfeinrichtung.

(57) Die Erfindung betrifft eine Oberflächenprüfeinrichtung mit einem schwingungsfähigen System zum
Hin- und Herbewegen eines über der zu prüfenden
Oberfläche angeordneten Sensorträgers (3) und mit
einer Erregeranordnung zum Betreiben des Systems
bei oder in der Nähe seiner Resonanzfrequenz Erfindungsgemäß enthält das schwingungsfähige System
Federelemente in Form von in entgegengesetzte
Richtungen auf den Sensorträger (3) einwirkenden
Luftfedern (5,6) die im Ruhezustand des System um
eine wenigstens dem halben Bewegungshub des
Sensorträgers (3) entsprechendes Maß vorgespannt
sind.

Fig. 1.

## Oberflächenprüfeinrichtung

Die Erfindung betrifft eine Oberflächenprüfeinrichtung der im Oberbegriff des Anspruchs 1 definierten Gattung.

Bekannte Oberflächenprüfeinrichtungen dieser Art (DE-OS 35 24 106) dienen u.a. zur Prüfung der Oberflächen von Flachstahlbrammen, Grobblechen oder anderen Prüfkörpern auf Fehler oder sonstige Eigenschaften mit Hilfe von vorzugsweise dicht oberhalb der zu prüfenden Oberflächen hin- und herbewegten Sensoren. Als Federelement dient dabei entweder ein einzelner Torsionsfederstab oder ein Paar von gleichsinnig erregten Torsionsfederstäben.

Die aus derartigen Torsionsfederstäben aufgebauten schwingungsfähigen Systeme bringen noch zahlreiche unerwünschte Probleme mit sich. Hierzu zählen beispielsweise die erforderlichen aufwendigen Arbeiten beim Austausch defekter Teile wie der Torsionsfederstäbe, ihrer Lagerungen, der Sensorträger od. dgl., die nur mit hohem Aufwand, z.B. dem Abbau von Systemteilen, mögliche, aber erwünschte Sichtkontrolle der Torsionsfederstäbe bzw. deren Lagerungen zwecks Früherkennung von Schäden, die Unmöglichkeit einer Verstellung der Nullstellung des Sensorträgers bzw. der Sensoren bei laufendem Betrieb, der hohe, durch das Fehlen serienmäßiger Bauteile, insbesondere Torsionsfederstäbe, bedingte Fertigungs- und Kostenaufwand und die nur durch Umbauten mögliche Einstellbarkeit der durch die schwingenden Massen und die Abmessungen der Torsionsfederstäbe festgelegten Resonanz- bzw. Eigenfrequenz des schwingungsfähigen Systems auf einen vorgewählten oder vorgeschriebenen Wert. Vor allem aber wird das erforderliche große Bauvolumen als störend empfunden, daß hauptsächlich von der erforderlichen Mindestgröße der Torsionsfederstäbe abhängt und insbesondere bei der Prüfung der Oberflächen von Brammen od. dgl. von mehreren Seiten her zu großen Platzproblemen führt, weil es die Zusammenfassung mehrerer schwingungsfähiger Systeme in einer einzigen, kompakten Oberflächenprüfstation behindert.

Der Erfindung liegt daher die Aufgabe zugrunde, die Oberflächenprüfeinrichtung der eingangs bezeichneten Gattung dahingehend zu verbessern, daß sie platzsparend ausgeführt werden kann und daß die Federelemente leicht zugänglich eingebaut, ggf. mit geringem Aufwand ausgetauscht und während des laufenden Betriebs visuell überwacht werden können.

Zur Lösung dieser Aufgabe dienen die kennzeichnenden Merkmale des Anspruchs 1.

Die Erfindung bringt mehrere erhebliche Vorteile mit sich. Neben der einfachen Ein- und Ausbaubarkeit, dem geringen Bauvolumen und der visuellen Überprüfbarkeit der Federelemente eröffnen Luftfedern auch bei laufendem Betrieb eine Vielzahl von Steuerungs- und Regelmöglichkeiten, insbesondere eine Veränderung der Eigenfrequenz des schwingungsfähigen Systems sowie Veränderungen der Nullstellung und/oder der Schwingungsamplitude des Sensorträgers bzw. der Sensoren. Schließlich ist der Fertigungs-, Montage- und Beschaffungsaufwand der erfindungsgemäßen Oberflächenprüfeinrichtung vergleichsweise gering, weil als Luftfedern an sich bekannte, serienmäßige Elemente verwendet werden können.

Weitere vorteilhafte Merkmale der Erfindung ergeben sich aus den Unteransprüchen.

Die Erfindung wird nachfolgend in Verbindung mit der beiliegenden Zeichnung an Ausführungsbeispielen näher erläutert. Es zeigen:

Fig. 1 schematisch und teilweise geschnitten den Aufbau einer erfindungsgemäßen, mit Luftfedern betriebenen Oberflächenprüfeinrichtung mit den zum Verständnis der Erfindung erforderlichen Bauteilen;

Fig. 2 eine der Fig. 1 entsprechende Darstellung einer alternativen Ausführungsform der Erfindung;

Fig. 3 die typische Kennlinie der erfindungsgemäßen Luftfedern;

Fig. 4 eine erfindungsgemäß linearisierte Kennlinie der Luftfedern;

Fig. 5 eine erfindungsgemäße Erregeranordnung für das schwingungsfähige System in Verbindung mit einer Steuer- bzw. Regeleinrichtung zur Veränderung der Amplitude des schwingungsfähigen Systems; und

Fig. 6 eine schematische Darstellung einer erfindungsgemäßen Steuer- bzw. Regeleinrichtung für die Prüfeinrichtung zwecks Änderung der Eigenfrequenz und/oder der Nullstellung des schwingungsfähigen Systems.

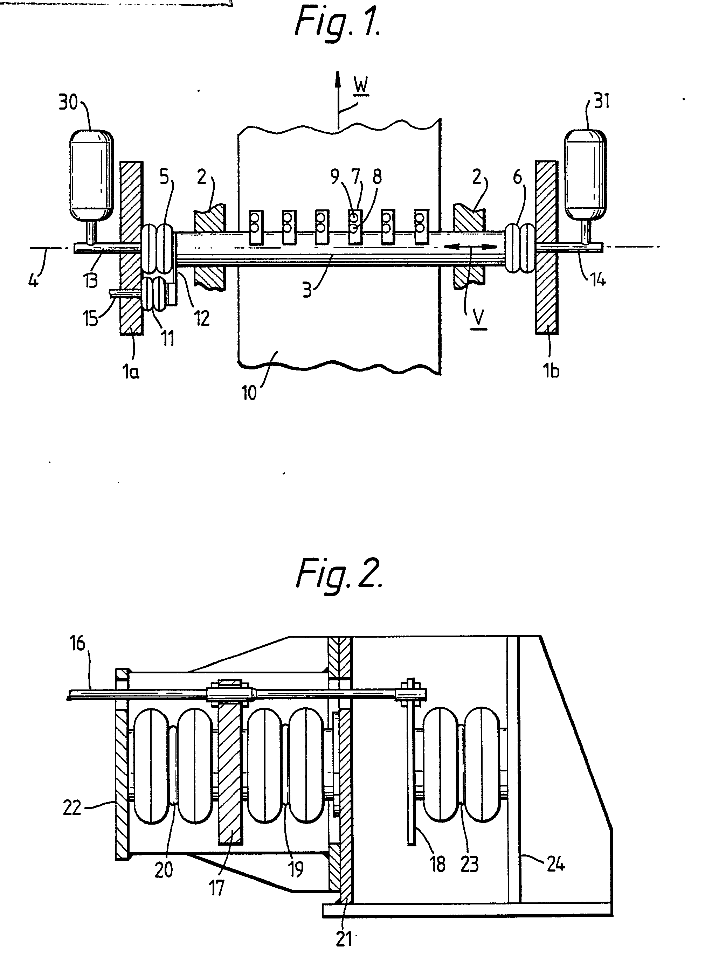

Fig. 1 zeigt eine Oberflächen-Prüfeinrichtung mit Ständern 1a, 1b und Lagern 2 eines Grundgestells. In den Lagern 2 (z.B. Luftlagern) ist ein Sensorträger 3 in Form eines vorzugsweise starren Balkens in Richtung eines Doppelpfeils v bzw. parallel zu seiner Längsachse 4 hin- und herbewegbar gelagert. An beiden Enden des Sensorträgers 3 ist das eine Ende je eines Federelements in Form einer Luftfeder 5 bzw. 6 befestigt, deren jeweils anderes Ende am Ständer 1a,b abgestützt und befestigt ist. Beide Luftfedern 5,6 sind in Druckrichtung derart vorgespannt, daß bei der dargestellten Ruhelage die Luftfeder 5 den Sensorträger 3 nach rechts in Richtung des Ständers 1b und umgekehrt die Luftfeder 6 den Sensorträger 3 nach links in Richtung des Ständers 1a zu drücken sucht. Beide Luftfedern 5,6 wirken somit in entgegengesetzte Richtungen auf den Sensorträger 3 ein und halten diesen bei gleicher Vorspannung und gleicher Federsteifigkeit (auch Richt- oder Direktionsgröße bezeichnet) in einer mittleren, normalen Nullstellung zwischen den Ständern 1a,b. In dieser Nullstellung sind die von beiden Seiten auf den Sensorträger 3 wirkenden Kräfte gleich groß, so daß sich bei gleicher geometrischer Ausbildung und Ankopplung der Luftfedern 5,6 in ihnen auch derselbe Luftdruck (nachfolgend "Mittendruck" bezeichnet) einstellt. Die Hauptwirklinien der Luftfedern 5,6 verlaufen vorzugsweise entlang der Längsachse 4 bzw. parallel dazu. In bezug auf die Luftfedern 5,6 fällt die normale Nullstellung etwa mit der Mitte derjenigen Strecke zusammen, die ihre mit dem Sensorträger 3 verbundenen Enden zwischen der äußersten zulässigen Zusammendrückung und der Ausdehnung der Luftfedern beim Fehlen äußerer Gegenkräfte zurücklegen würden. Der Gesamthub des Sensorträgers 3 wird dagegen gleich oder etwas kleiner gewählt, als dieser Strecke entspricht, so daß die Luftfedern 5,6 über den Gesamthub nur Druckkräfte auf den Sensorträger 3 ausüben.

Am Sensorträger 3 ist wenigstens ein Halter 7 für einen Prüfsensor 8 befestigt. Vorzugsweise sind längs des Sensorträgers 3 mehrere solcher Halter 7 vorgesehen, die außer den Prüfsensoren 8 (z.B. Rißsensoren) noch je einen Abstandsensor 9 tragen können. Die Sensoren 8,9 sind z.B. induktive bzw. mit Wirbelströhmen arbeitende Sensoren (DE-OS'en 20 44 331, 27 46 618, 33 24 444, US-PS 4,258,319), Ultraschallsensoren, Lasersensoren od. dgl. zur Ermittlung vorgewählter Eigenschaften (Dicken, Beschichtsqualitäten, Verformungen usw.).

Unter der Prüfeinrichtung ist ein Prüfkörper 10 mit der zu prüfenden Oberfläche, z.B. eine Flachstahlbramme, angeordnet, der mit Hilfe nicht dargestellter Rollen od. dgl. in Richtung eines Pfeils w, d.h. senkrecht zur Längsachse 4 des Sensorträgers 3 gefördert werden kann.

Der Sensorträger 3, die Luftfedern 5 und 6, die Halter 7 und die Sensoren 8 und 9 bilden ein schwingungsfähiges System, dessen Resonanzfrequenz von der Masse dieser Bauteile und den Direktionsgrößen der Luftfedern 5,6 abhängt.

Zur Erregung des schwingungsfähigen Systems dient zweckmäßig eine Erregeranordnung mit wenigstens einer weiteren Luftfeder 11, die z.B. mit einem Ende am Ständer 1a befestigt und abgestützt und mit dem anderen Ende über einen starren Arm 12 mit dem Sensorträger 3 fest verbunden ist. Die Luftfedern 5,6 können über Anschlüsse 13,14 mit Luft gefüllt bzw. entlüftet werden, um in ihnen einen vorgewählten, während des Betriebs im wesentlichen konstant bleibenden Luftdruck zu erzeugen, während die weitere Luftfeder 11 über einen Anschluß 15 im Takt der erzwungenen Schwingung mit Druckluft beaufschlagt bzw. entlüftet wird. Die hierzu erforderlichen Einrichtungen sind weiter unten erläutert. Der Ausdruck "Luft" umfaßt dabei natürlich auch andere für die Zwecke der Erfindung brauchbare Gase.

Nach einem Einschwingvorgang schwingt das schwingungsfähige System (3-9) mit der Frequenz der Erregeranordnung gegen die bestehenden Reibungskräfte (z.B. Luftreibung) in Pfeilrichtung v hin und her, wobei die Oberfläche des Prüfkörpers 10 von den Prüfsensoren 8 kontinuierlich auf Risse oder andere Eigenschaften überprüft wird, während gleichzeitig die Abstandsensoren 9 dazu dienen können, den Abstand der Prüfsensoren 8 von der zu prüfenden Oberfläche konstant zu halten (DE-OS 35 32 654).

Der maximale Bewegungshub des Sensorträgers 3 zwischen seinen Umkehrpunkten ist durch die im Einzelfall verwendeten Luftfedern 5 und 6 und den von den jeweiligen Herstellern derartiger Luftfedern vorgeschriebenen Grenzbelastungen vorgegeben. Obwohl auch die Anwendung anderer Luftfedern möglich wäre, werden für die Zwecke der Erfindung vorzugsweise Luftfedern 5,6 verwendet, die beim Betrieb nur auf Druck, aber nicht auf Zug belastet werden. Geeignet sind insbesondere reibungsarme Luftfedern in Form von Roll- oder Faltenbälgen aus Gummi od. dgl., die an ihren senkrecht zur Hauptwirklinie verlaufenden Flächen mit Montageplatten od. dgl. versehen sind.

Fig. 2 zeigt eine alternative Ausführungsform der Erfindung. Ein in nicht näher dargestellter Weise in einem Grundgestell verschiebbar gelagerter Sensorträger 16 weist zwei quer zu seiner Längsrichtung abstehende Arme 17 und 18 auf. Der Arm 17 ist zwischen den jeweils einen Enden von Luftfedern 19,20 abgestützt, die wie die Luftfedern 5,6 vorgespannt und mit ihren jeweils anderen Enden an Gestellwänden 21,22 abgestützt sind. Der andere Arm 18 ist mit dem einen Ende einer als Erreger wirkenden, weiteren Luftfeder 23 verbunden, deren anderes Ende an einer Wand 24 des Grundgestells abgestützt ist. Die Arme 17,18 sind zweckmäßig an einem Ende des Sensorträgers 16 angeordnet, könnten aber auch z.B. in einem mittleren Teil desselben vorgesehen sein.

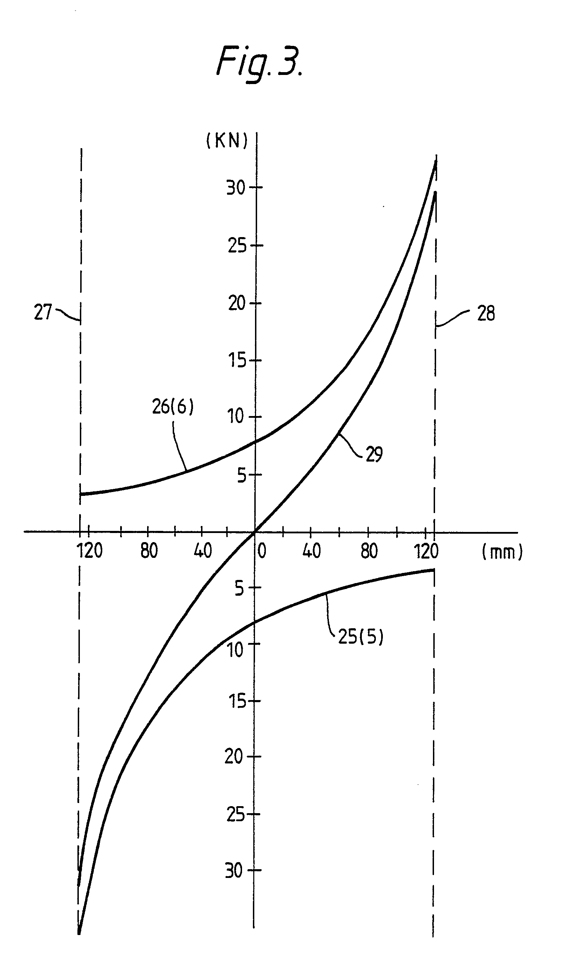

In Fig. 3 ist dargestellt, welche Federkennlinien und Direktionsgrößen bei Anwendung der erfindungsgemäßen Luftfedern 5,6 bzw. 19,20 erhalten werden. In einem kartesischen Koordinatensystem ist längs der Abszisse die Auslenkung in Druckrichtung in Millimetern und längs der Ordinate die von den Luftfedern infolge dieser Auslenkung entwickelte Rückstellkraft in Kilonewton abgetragen. Eine Kurve 25 bezeichnet z.B. die Kennlinie der Luftfeder 5, während die Kennlinie der Luftfeder 6 durch eine Kurve 26 angegeben ist. Im Nullpunkt des Koordinatensystems übt daher die Luftfeder 5 aufgrund der beschriebenen Vorspannung eine in Fig. 1 nach rechts wirkende Rückstellkraft von ca. - 7,5 kN auf den Sensorträger 3 aus, während gleichzeitig die Luftfeder 6 mit einer in Fig. 1 nach links gerichteten Rückstellkraft von ca. + 7,5 kN auf den Sensorträger 3 wirkt, so daß sich dieser im Gleichgewicht, d.h. in seiner normalen Ruhelage bzw. Nullstellung befindet. Schwingt der Sensorträger 3 aus dieser Nullstellung in Fig. 1 bzw. 3 nach rechts aus, dann vergrößert sich die Rückstellkraft der Luftfeder 6 entsprechend der Kurve 26, während gleichzeitig die restliche Rückstellkraft der Luftfeder 5 immer mehr abnimmt. Bei einer Auslenkung von ca. 120 mm ist die Rückstellkraft der Luftfeder 6 mit ca. 30 kN sehr groß, die Rückstellkraft der Luftfeder 5 mit ca. 3 kN dagegen nur noch sehr klein. Entsprechende Verhältnisse mit umgekehrtem Verlauf und umgekehrter Richtung der Rückstellkräfte ergeben sich bei der Auslenkung des Sensorträgers 3 in Fig. 1 und 3 nach links. Die im dargestellten Beispiel möglichen Auslenkungen der mit dem Sensorträger 3 verbundenen und mit diesem hin- und herbeweglichen Enden der Luftfedern sind durch gestrichelte Linien 27,28 bezeichnet, woraus sich für den Sensorträger 3 ein maximal möglicher Bewegungshub von etwas weniger als ca. 250 mm ergibt.

Die Resultierende aus den Kennlinien 25,26 ist in Fig. 3 durch eine Kurve 29 angegeben, die sich aus den Summen der jeweiligen Rückstellkräfte ergibt. Danach wirkt auf den Sensorträger 3 in der Nullstellung keine resultierende Rückstellkraft, wohingegen sich bei seiner Auslenkung nach rechts (links) in Fig. 1 und 3 eine resultierende Rückstellkraft einstellt, die nach links (rechts) wirkt.

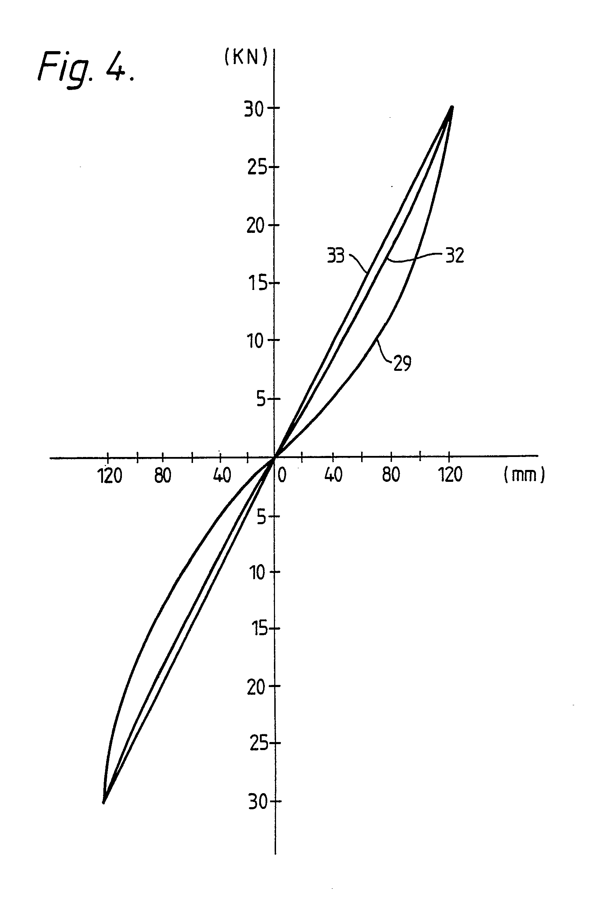

Da die Direktionsgröße des aus den beiden Luftfedern 5,6 bzw. 19,20 gebildeten Federsystems als Steigung der nur weitgehend linear verlaufenden Kurve 29 gedacht werden kann, ist sie vor allem an den Enden des tolerierten Bewegungshubs 27,28 veränderlich mit der Folge, daß sich eine nichtharmonische Schwingung für das schwingungsfähige System ergibt. Das ist zuweilen unerwünscht, da sich die Auswertung der von den Sensoren 8,9 gelieferten Signale einfacher gestaltet, wenn das schwingungsfähige System eine harmonische Sinusschwingung ausführt, die einen vollkommen linearen Zusammenhang zwischen der Rückstellkraft und der Auslenkung voraussetzt. Ein solcher linearer Zusammenhang kann erfindungsgemäß dadurch erhalten werden, daß die Anschlüsse 13,14 strömungsmäßig mit starren Vorratsbehältern 30,31 oder auch Behältern mit einstellbarem Volumen verbunden werden, die ein Zusatzvolumen an Luft aufnehmen, das im Gegensatz zu den Luftfedern 5,6 bzw. 19,20 während der Schwingungen konstant bleibt. Derartige Zusatzvolumina wirken sich, insbesondere wenn sie gleich groß sind, entsprechend Fig. 4 dahingehend aus, daß die ursprünglich gekrümmte Kennlinie entsprechend der Kurve 29 stark abgeflacht (Kurve 32) und dem optimalen linearen Verlauf (Kurve 33) weitgehend angenähert wird.

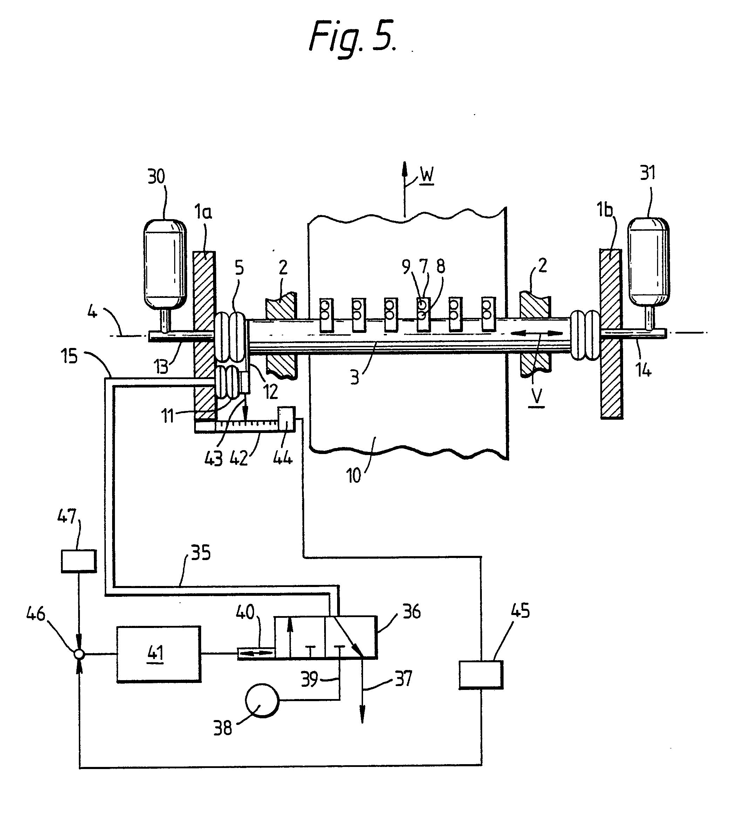

Fig. 5 zeigt eine Erregeranordnung für das schwingungsfähige System anhand der Ausführungsform nach Fig. 1, obwohl dieselbe Erregeranordnung auch für die Ausführungsform nach Fig. 2 verwendet werden könnte. Die Anschlüsse 13,14 sind dabei als geschlossen angenommen. Mit dem Anschluß 15 ist über eine Strömungsleitung 35 der Ausgang eines 3/2-Wege- Ventils 36 verbunden, das einen zur freien Atmosphäre (Entlüftungsleitung 37) führenden Eingang und einen Eingang aufweist, der an eine mit einer Druckluftquelle 38 verbundene Druckleitung 39 angeschlossen ist, so daß die Strömungsleitung 35 in der einen Ventilstellung mit der freien Atmosphäre und in der anderen Ventilstellung mit der Druckluftquelle 38 verbunden ist. Ein elektrischer Steueranschluß 40 des Ventils 36 ist mit dem Ausgang eines Reglers 41 verbunden. Zur Messung der vorzugsweise parallel zum Pfeil v erfolgenden Auslenkung der Luftfeder 11 ist eine ebenfalls parallel zum Pfeil v wirksame Wegmeßeinrichtung 42 angeordnet, die mit induktiven, optischen od. dgl. Mitteln die jeweilige Stellung eines Zeigers 43 od. dgl. abtastet, der an dem mit dem Arm 12 verbundenen Ende der Luftfeder 11 befestigt ist und einen Wandler 44 aufweist, der an seinem Ausgang ein elektrisches, der jeweiligen Schwingweite der Luftfeder 11 entsprechendes Signal abgibt. Dieses Signal wird mit einem Spitzenwertmesser 45 bei jedem Bewegungshub in ein die momentan erreichte Amplitude des Zeigers 43 bzw. des Sensorträgers 3 anzeigendes Signal umgewandelt, so daß die Wegmeßeinrichtung 42 und der Spitzenwertmesser 45 als Istwertgeber für die Amplitude wirken. Das erzeugte Istsignal wird einem Vergleicher 46 zugeführt und in diesem mit einem von einem Sollwertgeber 47 gelieferten Sollwertsignal für die im Einzelfall erwünschte Amplitude der Luftfeder 11 verglichen. Der Vergleicher 46 gibt ein Signal ab, das der Differenz zwischen dem Sollwertsignal und dem vom Spitzenwertmesser 45 kommenden Istwertsignal entspricht und einem Eingang des Reglers 41 zugeführt wird. Dieser gibt an seinem Ausgang ein Stellsignal für den Steueranschluß 40 des Ventils 36 ab, wodurch dieses bei jedem Hub der Luftfeder 11 so lange eingeschaltet wird, daß sich die Länge des Bewegungshubs im wesentlichen auf den vom Sollwertgeber 47 gelieferten Sollwert einstellt. Beträgt die Eigenfrequenz des Schwingungsfähigen Systems (3,5-9) beispielsweise 4 Hz entsprechend einer Schwingungsdauer von 250 msec, dann wird das Ventil 36 beispielsweise mit derselben Folgefrequenz für eine Dauer von z.B. ca. je 30 msec eingeschaltet und infolgedessen die Luftfeder 11 für eine entsprechende Zeitlang mit der Druckluftquelle 38 verbunden. Daran anschließend wird die Luftfeder 11 wieder mit der äußeren Atmosphäre verbunden, so daß dann keine erregende Kraft mehr auf das schwingungsfähige System übertragen wird. In diesem Beispiel arbeitet der Regler 41 nach Art einer Impulsbreitensteuerung mti einem einstellbaren Tastverhältnis, das vom jeweiligen Istwert am Ausgang des Spitzenwertmessers 45 und vom gewünschten Sollwert abhängig ist. Die Einschaltzeitpunkte eilen dabei der Schwingung des schwingungsfähigen Systems entsprechend voraus, vorzugsweise etwa um 90°.

Alternativ können die Einschaltungen des Ventils 36 auch mit einer von der Resonanzfrequenz des schwingungsfähigen Systems abweichenden Folgefrequenz vorgenommen werden. Die Erregung des schwingungsfähigen Systems sollte aber zumindest mit einer in der Nähe der Resonanzfrequenz liegenden Frequenz erfolgen, um die zum Erregen der schwingenden Massen benötigten Kräfte kleinzuhalten.

Die Luftfeder 11 ist zweckmäßig so zwischen dem Sensorhalter 3 und dem Ständer 1a eingespannt, daß sie wie die Luftfedern 5,6 im wesentlichen nur auf Druck beansprucht und daher maximal auf einen Wert ausgelenkt wird, der sich aus dem Druck der Druckluftquelle 38 bei fehlenden äußeren Kräften ergibt.

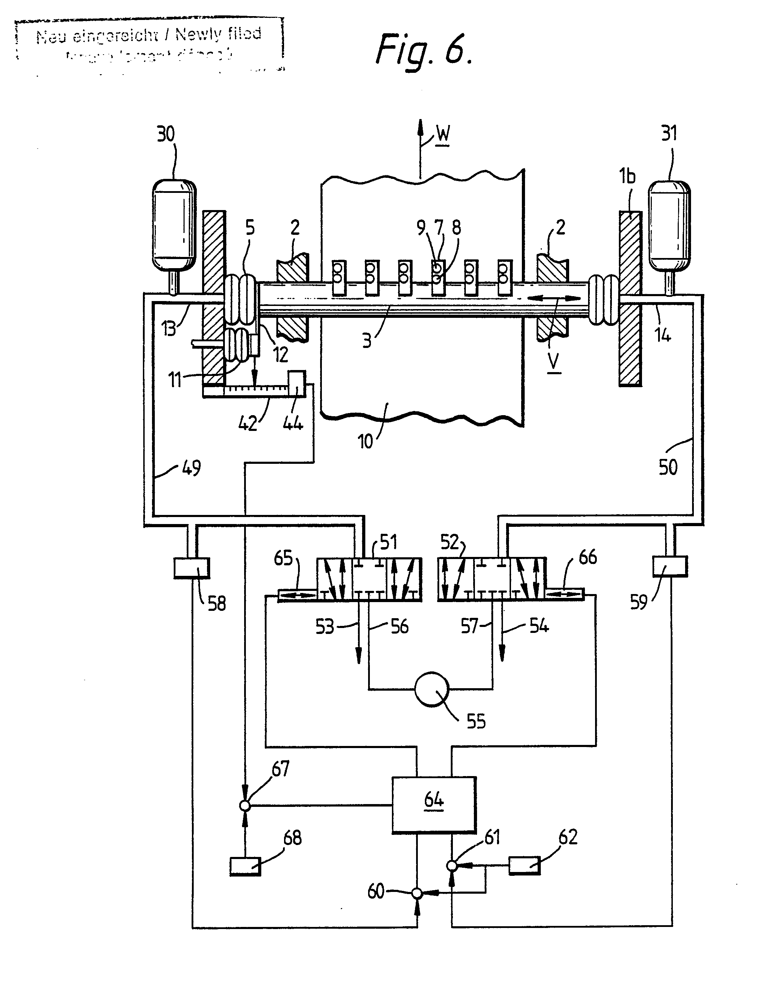

Fig. 6 zeigt Einrichtungen, mit denen auf einfache Weise die Nullstellung und die Resonanzfrequenz bzw. die Mittendrücke verändert werden können. Die anhand des Ausführungsbeispiels nach Fig. 1 dargestellte Einrichtung kann entsprechend auch bei der Ausführungsform nach Fig. 2 angewendet werden.

Nach Fig. 6 sind die Anschlüsse 13,14 über Strömungsleitungen 49,50 an den Ausgang je eines 5/3-Wege-Ventils 51 bzw. 52 angeschlossen, das je einen an die äußere Atmosphäre führenden Eingang (Entlüftungsleitungen 53,54) und je einen weiteren Eingang aufweist, der über je eine Druckleitung 56, 57 an eine Druckluftquelle 55 angeschlossen ist. In die Strömungsleitungen 49,50 sind jeweils Druckmesser 58,59 (Istwertgeber) geschaltet, die an ihren Ausgängen elektrische, den momentanen Mitteldrücken in den Leitungen 49,50 entsprechende elektrische Signale abgeben und diese je einem Vergleicher 60,61 zuführen, dessen anderer Eingang mit einem Sollwertgeber 62 für diese Mittendrücke und dessen Ausgang mit einem Regler 64 verbunden ist. Die Ausgänge diese Reglers 64 sind mit je einem Steueranschluß 65,66 der Ventile 51,52 verbunden, um diese durch entsprechende Steuersignale in eine der drei dargestellten Stellungen schalten zu können.

Die Strömungsleitungen 49,50 sind in der dargestellten Normalstellung der Ventile 51,52 verschlossen, in einer weiteren Stellung an die Entlüftungsleitungen 53,54 angeschlossen und in der dritten Stellung mit den Druckleitungen 56,57 verbunden. Die schon anhand Fig. 5 beschriebene Wegmeßeinrichtung 42 ist mit einem weiteren Vergleicher 67 verbunden, an dessen Ausgang ein Sollwertgeber 68 für die Nullstellung angeschlossen ist und dessen anderen Eingang an einem Eingang des Reglers 64 liegt. Die Wegmeßeinrichtung 52 dient in diesem Fall als Istwertgeber für Nullstellung des schwingungsfähigen Systems.

Zur Einstellung und/oder Änderung der Resonanzfrequenz des schwingungsfähigen Systems bzw. des Mittendrucks in den Luftfedern 5,6 wird die beschriebene Einrichtung wie folgt betrieben.

Mit Hilfe des Sollwertgebers 62 wird eine Sollwert für die Mittendrücke beider Luftfedern 5,6 vorgewählt. Da die in den Luftfedern 5,6 bzw. Behältern 30,31 befindliche Luft die Federsteifigkeit des schwingungsfähigen Systems bzw. das Direktionsmoment festlegt und dieses durch Zufuhr von mehr Luft erhöht bzw. durch Abzug von Luft vermindert wird, hat eine Vergrößerung (Verminderung) der Mittendrücke in der Nullstellung auch eine Erhöhung (Verminderung) der Resonanzfrequenz des Systems zur Folge.

Eine Einstellung bzw. Änderung des Sollwerts mit dem Sollwertgeber 62 bewirkt außerdem, daß beim Abweichen der durch die Druckmesser 58,59 ermittelten Mittendrücke vom eingestellten Sollwert die Vergleicher 60,61 entsprechende Differenzsignale abgeben, die vom Regler 64 in Stellsignale für die Ventile 51,52 umgewandelt werden, die daraufhin - ausgehend von ihrer Stellung nach Fig. 6 - solange in die eine oder andere der beiden möglichen Stellungen versetzt werden, daß die Luftmengen und damit auch die Mittendrücke in den Luftfedern 5,6 in der gewünschten Weise erhöht oder vermindert werden.

Soll mit Einrichtung nach Fig. 6 eine Änderung der Nullstellung des Sensorträgers 3 herbeigeführt, d.h. seine Stellung im Ruhezustand bzw. seine Stellung bei den Nulldurchgängen im schwingenden Zustand gegenüber der aus Fig. 1 bzw. 3 ersichtlichen normalen Nullstellung nach rechts oder links verschoben werden, kann diese Einrichtung wie folgt auf zweifache Weise ausgebildet und wirksam sein:

Bei der einen Variante wird die Luftmenge nur in der einen oder anderen Luftfeder 5,6 vergrößert oder verkleinert, indem der Sollwertgeber 68 entsprechend eingestellt wird. Eine Änderung des Sollwerts bewirkt, daß dem Regler 64 vom Vergleicher 67 ein Differenzsignal zugeführt wird und der Regler 64 darauf die eine oder andere Strömungsleitung 49,50 so lange über die Ventile 51,52 an die Druck- oder Entlüftungsleitungen 56,57 bzw. 53,54 anschließt, bis aufgrund der größeren oder kleineren Luftmengen in der einen oder anderen Kombination aus Luftfeder 5 und Behälter 30 bzw. Luftfeder 6 und Behälter 31 die gewünschte Verschiebung der Nullstellung erreicht ist. Im schwingenden Zustand schwingt dann das schwingungsfähige System um diese neue Nullstellung, die z.B. mittels der Wegmeßeinrichtung 42 auch optisch angezeigt werden könnte. Die beschriebene Änderung der Nullstellung ist allerdings mit einer nicht immer erwünschten Veränderung der Resonanzfrequenz des schwingungsfähigen Systems verbunden, da die einseitige Zufuhr oder Abfuhr von Luft auch zu einem veränderten Mittendruck in der neu eingestellten Nullstellung führt.

Gemäß der anderen, bevorzugten Variante wird daher zur Änderung der Nullstellung die Luftmenge derart in der einen Luftfeder vergrößert und gleichzeitig in der anderen Luftfeder verkleinert, daß in der neuen Nullstellung in beiden Luftfedern 5,6 derselbe Mittendruck wie in der normalen Mittellage nach Fig. 1 und 3 herrscht. Dadurch wird auf einfache Weise sichergestellt, daß die Eigenfrequenz des schwingungsfähigen Systems trotz Änderung der Nullstellung konstant bleibt. Die Regelung erfolgt dabei vorzugsweise in der Weise, daß dem Regler 64 einerseits die vom Vergleicher 67 kommenden Differenzsignale und andererseits die von den Vergleichern 60,61 kommenden Differenzsignale zugeführt werden. Der Regler schaltet daraufhin beide Ventile 51,52 unter Berücksichtigung des am Sollwertgeber 62 eingestellten Mittendrucks so, daß die Luftmenge in der einen Kombination (z.B. 5,30) erhöht (erniedrigt) und gleichzeitig in der anderen Kombination (z.B. 6,31) entsprechend erniedrigt (erhöht) und dadurch die Resonanzfrequenz des schwingungsfähigen Systems auf dem am Sollwertgeber 62 eingestellten Wert gehalten wird.

Die Druckmesser 58,59 und die Wegmeßeinrichtung 42 sind für die beschriebene Regelung zweckmäßig so eingerichtet, daß sie jeweils nur bei den Nulldurchgängen des Sensorträgers eine entsprechendes Ausgangssignal abgeben. Alternativ wäre es aber auch möglich, dem Regler 64 eine Rechenanlage zuzuordnen, die die von den Druckmessern 58,59 und der Wegmeßeinrichtung 42 gelieferten, sinusförmigen Ausgangssignale automatisch auf ihre positiven bzw. negativen Spitzenwerte überprüft und die benötigten Nullstellungssignale als deren Mittelwerte abbildet. Dadurch können die Frequenzen und Nullstellungen in beiden Fällen auch während des Schwingens des Systems verändert werden. Letzteres ist z.B. erwünscht, wenn sich die Mittellage des Prüfkörpers 10 während seines Transport in Richtung des Pfeils w ändert.

Als Luftfedern 5,6 und 11 werden vorzugsweise handelsübliche Luftfedern verwendet, wie sie bisher z.B. für die Isolierung von Schwingungen, für die elastische Lagerung von Maschinen, zur Federung im Kraftfahrzeugbau od. dgl. bekannt sind. Luftfedern des Typs FD 1120-30 der Firma Continental-Gummi-Werke AG in D-3000 Hannover (Deutschland) haben sich für die Zwecke der Erfindung bisher als am besten geeignet erwiesen. Sie ermöglichen bei einer schwingenden Masse von 250 kg Schwingungen mit einer Doppelamplitude von 250 mm bei 5 Hz und einem Mittendruck von ca. 2 Bar. Dabei sind Änderungen der Nullstellung des Sensorträgers 3 bis ca. ± 20 mm möglich. Die durch derartige maximale Nullstellungsänderungen bewirkten Änderungen der Kennlinien der Luftfedern sind dabei so klein, daß sie die Gesamtkennlinie des schwingungsfähigen Systems nur wenig beeinflussen und für die Praxis unbedeutend sind, insbesondere wenn entsprechende Zusatzvolumina (Behälter 30,31) vorgesehen werden. Eine durch die Nullstellungsveränderungen bewirkte Verkleinerung des nutzbaren Bewegungshubs des Sensorträgers 3 kann dadurch vermieden werden, daß von vornherein ein entsprechend kleinerer Bewegungshub gewählt wird, als dem maximal zulässigen, auf die normale Nullstellung nach Fig. 1 und 3 bezogenen Bewegungshub entspricht.

Die Erfindung ist nicht auf die beschriebenen Ausführungsbeispiele beschränkt, die sich auf vielfache Weise abwandeln lassen. Dies gilt einerseits für die anhand von Fig. 1 und 2 nur beispielsweise dargestellten Arten der Ankopplung der Luftfedern 5,6 an den Sensorträger, andererseits für die anhand der Fig. 5 und 6 dargestellten Arten der Einstellung der Schwingungsamplitude, der Eigenfrequenz und der Nullstellung des schwingungsfähigen Systems. Beispielsweise wäre es möglich, die Ventile 36 und auch die Ventile 51,52 nicht durch Impulse von veränderlicher Breite, sondern durch Impulse anzusteuern, die eine vorgewählte konstante Breite besitzen, und stattdessen die Zahl der den Ventilen zugeführten Impulse zu verändern. Dies wäre allerdings mit einer hohen Schaltfrequenz für die Ventile verbunden. Anstelle von Regelvorrichtungen könnten auch entsprechend wirkende, manuell betätigbare Steuervorrichtungen vorgesehen sein, mittels derer in Fig. 5 das Ventil 36 so verstellt wird, bis sich die z.B. nur optisch angezeigte Schwingungsamplitude eingestellt hat, oder in Fig. 6 die Ventile 51 und/oder 52 derart beaufschlagt werden, daß sich die gewünschte Resonanzfrequenz oder Nullstellung des schwingungsfähigen Systems ergibt. Dabei könnte zur Anzeige der jeweiligen Schwingungsfrequenzen zusätzlich ein Frequenzmesser vorgesehen sein. Schließlich können andere als die in Fig. 5 dargestellten Erregeranordnungen benutzt werden, obwohl diese besonders zweckmäßig sind.

Als Druckluftquellen 38,55 werden zweckmäßig die in Fabrikhallen üblicherweise vorhandenen Druckluftanlagen verwendet, mit denen meistens 5 Bar verfügbar sind. Bei Anwendung der anhand von Fig. 5 und 6 beschriebenen Einrichtung kann mit Druckluftquellen gearbeitet werden, die einen konstanten Druck abgeben. Um jedoch einen gewissen Spielraum für ggf. erforderliche Frequenzänderungen zu lassen, wird zweckmäßig mit einem geringeren Mittendruck von z.B. 2 Bar gearbeitet.

Die beschriebenen Ventile 36,51 und 52 sind nur als Beispiele aufzufassen. Sie wurden aus den handelsüblichen Ventilen ausgewählt, können aber auch aus Ventilen bestehen, die dem speziellen Anwendungszweck angepaßt sind.

Die Erfindung ist auch nicht auf die Anwendung von zwei Luftfedern beschränkt. Bei entsprechender Bemessung und Anordnung können vielmehr auch 3,4 oder mehr Luftfedern vorgesehen werden. Bei Anwendung einer ungeraden Zahl von Luftfedern oder von nicht bauartgleichen Luftfedern können sich in der Nullstellung trotz insgesamt gleicher Rückstellkräfte unterschiedliche Mittendrücke in den einzelnen Luftfedern einstellen. Daher kann es in derartigen Fällen u.a. zweckmäßig sein, in Fig.6 jeder Luftfeder einen eigenen Sollwertgeber 62 zuzuordnen.

## Ansprüche

1) Oberflächenprüfeinrichtung mit einem Grundgestell, einem schwingungsfähigen, eine Resonanzfrequenz aufweisenden System und einer Erregeranordnung zum Betreiben des Systems bei oder in der Nähe seiner Resonanzfrequenz, wobei das System einen Sensorträger, wenigstens einen daran befestigten Prüfsensor und mit dem Sensorträger gekoppelte Federelemente zur Hin- und Herbewegung des Sensorträgers enthält, dadurch gekennzeichnet, daß die Federelemente aus in entgegengesetzte Richtungen auf den Sensorträger (3,16) einwirkenden Luftfedern (5,6,19,20) bestehen, die im Ruhezustand des Systems um ein wenigstens dem halben Bewegungshub des Sensorträgers (3,16) entsprechendes Maß vorgespannt sind.

2) Oberflächenprüfeinrichtung nach Anspruch 1, dadurch gekennzeichnet, daß die Luftfedern (5,6) je einen Anschluß (13,14) aufweisen, der mit einem ein Zusatzvolumen schaffenden Behälter (30,31) verbunden ist.

3) Oberflächenprüfeinrichtung nach Anspruch 1 oder 2, dadurch gekennzeichnet, daß die Erregeranordnung wenigstens eine weitere, zwischen dem Grundgestell (1a,b;24) und dem Sensorträger (3,16) abgestützte Luftfeder (11,23) und eine Einrichtung zu deren periodischer Auslenkung aufweist.

4) Oberflächenprüfeinrichtung nach Anspruch 3, dadurch gekennzeichnet, daß die Einrichtung eine Regelvorrichtung mit einem Sollwertgeber (47) zur Vorwahl der Schwingungsamplitude, einen Istwertgeber (42-45) für die momentane Schwingungsamplitude, einen Regler (41) und ein Steuerventil (36) enthält, das zwei mit einer Druck- bzw. Entlüftungsleitung (37,39) verbundene Eingänge, einen mit der weiteren Luftfeder (11) verbundenen Ausgang und einen mit dem Regler (41) verbundenen Steueranschluß (40) aufweist.

5) Oberflächenprüfeinrichtung nach einem der Ansprüche 1 bis 4, dadurch gekennzeichnet, daß die Luftfedern (5,6) Anschlüsse (13,14) aufweisen, die über je ein steuerbares Ventil (51,52) mit je einer Druck- und Entlüftungsleitung (53,56 bzw. 54,57) verbindbar sind.

6) Oberflächenprüfeinrichtung nach einem der Ansprüche 1 bis 5, dadurch gekennzeichnet, daß sie eine Einrichtung zur Einstellung einer vorgewählten Resonanzfrequenz des schwingungsfähigen Systems aufweist.

7) Oberflächenprüfeinrichtung nach Anspruch 6, dadurch gekennzeichnet, daß die Einrichtung eine Regelvorrichtung mit wenigstens einem Sollwertgeber (62) zur Vorwahl der Mittendrücke in den Luftfedern (5,6) zwei Druckmesser (58,59) zur Ermittlung der momentanen Mittendrücke in den Luftfedern (5,6) einen Regler (64) und zwei Steuerventile (51,52) enthält, die je zwei mit einer Druckbzw. Entlüftungsleitung (56,57 bzw. 53,54) verbundene Eingänge, je einen mit einer zugeordneten Luftfeder (5,6) verbundenen Ausgang und je einen mit dem Regler (64) verbundenen Steueranschluß (65,66) aufweisen.

8) Oberflächenprüfeinrichtung nach einem der Ansprüche 1 bis 7, dadurch gekennzeichnet, daß sie eine Einrichtung zur Einstellung einer vorgewählten Nullstellung des Sensorträgers (3) aufweist.

9) Oberflächenprüfeinrichtung nach Anspruch 8, dadurch gekennzeichnet, daß sie zwei Steuerventile (51,52) enthält, die je zwei mit einer Druckbzw. Entlüftungsleitung (56,57 bzw. 53,54) verbundene Eingänge, je einen mit einer zugeordneten Luftfeder (5,6) verbundenen Ausgang und je einen mit dem Regler (64) verbundenen Steueranschluß (65,66) aufweisen.

10) Oberflächenprüfeinrichtung nach Anspruch 9, dadurch gekennzeichnet, daß sie eine Regelvorrichtung mit einem Sollwertgeber (66) zur Vorwahl der Nullstellung, eine Wegmeßeinrichtung (42) zur Ermittlung der momentanen Nullstellung, einen Regler (64) und die beiden Steuerventile (51,52) enthält.

## Fig.1.

## Fig.2.

# Fig.3.

Fig. 4.

## Fig. 5.

## Fig. 6.